# EUROPÄISCHE PATENTSCHRIFT

(11) **EP 1 297 030 B1**
(45) Veröffentlichungstag und Bekanntmachung des Hinweises auf die Patenterteilung: **25.08.2004**
(21) Anmeldenummer: 01957902.8
(22) Anmeldetag: 28.06.2001
(51) Int. Cl.: C08F 10/02, C08F 4/00

(54) **GETRÄGERTER, TITANISIERTER CHROM-KATALYSATOR UND SEINE VERWENDUNG ZUR HERSTELLUNG VON ETHYLENHOMOPOLYMERISATEN UND -COPOLYMERISATEN**
SUSPENDED CHROME CATALYST CONTAINING TITANIUM AND THE USE THEREOF FOR PRODUCING ETHYLENE HOMOPOLYMERS AND COPOLYMERS
CATALYSEUR SUPPORTE, AU CHROME ET AU TITANE, ET SON UTILISATION POUR LA PRODUCTION D'HOMOPOLYMERES D'ETHYLENE ET DE COPOLYMERES D'ETHYLENE

(30) Priorität: 05.07.2000 DE 10032057
(43) Veröffentlichungstag der Anmeldung: 02.04.2003
(73) Patentinhaber: Basell Polyolefine GmbH, 50389 Wesseling (DE)
(72) Erfinder: SCHNEIDER, Martin, D-67065 Ludwigshafen (DE); KARER, Rainer, D-67657 Kaiserslautern (DE); LILGE, Dieter, D-67117 Limburgerhof (DE); RAUSCHENBERGER, Volker, D-67304 Eisenberg (DE); ROSENDORFER, Philipp, D-67434 Neustadt (DE); WULFF-DÖRING, Joachim, D-67227 Frankenthal (DE); SCHWEIER, Günther, D-67159 Friedelsheim (DE); LUX, Martin, 92720 Schwarzenbach (DE); BAUER, Peter, D-67071 Ludwigshafen (DE)
(86) Internationale Anmeldenummer: PCT/EP2001/007410
(87) Internationale Veröffentlichungsnummer: WO 2002/002652

(56) Entgegenhaltungen:
- EP-A- 0 591 968
- EP-A- 0 805 164
- EP-A- 0 857 737
- EP-A- 0 882 740
- EP-A- 0 962 468
- WO-A-99/12982

## Beschreibung

Die vorliegende Erfindung betrifft neue geträgerte, titanisierte Chrom-Katalysatoren für die Homopolymerisation von Ethylen und die Copolymerisation von Ethylen mit α-Olefinen, ein Verfahren zu deren Herstellung, sowie deren Verwendung zur Polymerisation von Olefinen.

Ethylenhomopolymere und Copolymere von Ethylen mit höheren α-Olefinen wie 1-Buten, 1-Penten, 1-Hexen oder 1-Okten können z.B. mit geträgerten Titanverbindungen, den sogenannten Ziegler-Natta Katalysatoren, aber auch mit geträgerten Chromverbindungen, den sogenannten Phillips-Katalysatoren dargestellt werden. Bei der Verwendung der Polyethylenhomo- und -copolymere z.B. für das Blasfolienextrusionsverfahren ist es dabei wichtig, dass diese eine gute Ausgewogenheit zwischen mechanischen Eigenschaften und Verarbeitbarkeit besitzen.

Es ist bekannt, dass geträgerte Chrom-Katalysatoren sehr gut geeignet sind, Polyethylencopolymere mit guten mechanischen Eigenschaften zu liefern. Die Eigenschaften der in der Polymerisation erhaltenen Polymere sind von der Art und Weise der Darstellung des verwendeten Chrom-Katalysators abhängig, insbesondere von der Art des Trägermaterials, wie z.B. dessen chemischer Struktur, Aufbau, Oberfläche oder Porenvolumen, der Art der verwendeten Chromverbindung, der Anwesenheit von weiteren Verbindungen wie z.B. Titanverbindungen, Aluminiumalkyle oder Kohlenmonoxid, der Reihenfolge des Aufbringes der verschiedenen Komponenten oder auch der Art der Calcinierung und Aktivierung. Es ist eine Kombination der verwendeten Ausgangsmaterialien zusammen mit der speziellen Trägerungsrezeptur, die dann den gewünschten Chrom-Katalysator für die Darstellung der Polymere entsprechend dem Anforderungsprofil der spezifischen Anwendungsgebiete ergibt.

Die geträgerten Chrom-Katalysatoren sind oftmals titanisiert, d.h. sie enthalten ausser der Chromverbindung variable Anteile einer Titanverbindung, mit deren Hilfe z.B. Einfluss auf die Molmassenverteilung und den HLMI (High load melt index) genommen werden kann.

So wird z.B. in EP-A-882740 ein Verfahren zur Herstellung eines geträgerten Chrom-Katalysators beschrieben, wobei das Trägermaterial eine spezifische Oberfläche von 450 bis 600 m²/g besitzt und zuerst die Chromkomponente und anschliessend die Titanverbindung auf den Träger aufgebracht wird, wobei die Titanisierung bei Temperaturen von mindestens 300 °C erfolgt.

EP-A-882741 lehrt, dass Polyethylene mit günstigen Reissfestigkeiten bei Verwendung eines geträgerten Chrom-Katalysators erhalten werden, dessen Trägermaterial eine spezifische Oberfläche von mindestens 400 m²/g besitzt und vor der Verwendung dehydratisiert wurde und wobei zuerst die Chromkomponente und anschliessend die Titanverbindung auf den Träger aufgebracht wird.

In WO 97/48742 werden Polymerisationskatalysatoren, welche Kieselgele mit einer Partikelgrösse von 5 bis 250 µm, einer spezifischen Oberfläche von 10 bis 1000 m²/g und einem AQI Wert (attrition quality index, als Maß für die Abriebsfestigkeit) grösser 10 beschrieben, wobei die Primärpartikel mittels eines Binders lose miteinander verknüpft sind. Als aktive Metallkomponenten können unter anderem Chromverbindungen verwendet werden. Es sind jedoch keine Angaben zur Darstellung von titanisierten Phillips-Katalysatoren enthalten.

Obwohl mit vielen der Rezeptur/Komponenten Kombinationen schon recht gute mechanische Eigenschaften bei den so hergestellten Polymeren erhalten werden können, sind oft Probleme mit der Blasenstabilität beim Folienblasverfahren zu beobachten.

Der vorliegenden Erfindung lag daher die Bereitstellung neuer Ethylenpolymerisate zugrunde, welche einerseits gute mechanische Eigenschaften und andererseits eine gute Blasenstabilität bei Verwendung im Folienblasverfahren besitzen.

Demgemäss wurde nun ein Verfahren zur Herstellung von geträgerten, titanisierten Chrom-Katalysatoren gefunden, dadurch gekennzeichnet, dass es folgende Schritte umfasst:
A) Kontaktieren eines sphärischen, sprühgetrockneten, oxidischen Trägermaterials in einer Suspension mit einer Titanverbindung,
B) Kontaktieren des so behandelten Trägermaterials in einer Suspension mit einer Chromsalzlösung und anschliessendes Entfernen des Lösungsmittels,
C) optional Calcinierung des nach Schritt B) erhaltenen Präkatalysators in einer Inertgasatmosphäre bei Temperaturen grösser 280°C und anschließende
D) Aktivierung des nach Schritt B) oder C) erhaltenen Präkatalysators in einer sauerstoffhaltigen Atmosphäre bei Temperaturen von 500°C bis 800°C.

Weiterhin betrifft die Erfindung neue geträgerte, titanisierte Chrom-Katalysatoren, die für die Polymerisation von Ethylen und gegebenenfalls weiterer Comonomerer geeignet sind, erhältlich nach dem erfindungsgemässen Verfahren. Im folgenden wird dieser neue geträgerte, titanisierte Chrom-Katalysator für die Homopolymerisation von Ethylen und die Copolymerisation von Ethylen mit α-Olefinen der Kürze halber als "erfindungsgemässer Chrom-Katalysator" bezeichnet.

Dementsprechend wurde nun gefunden, dass bei Verwendung der erfindungsgemäßen Chrom-Katalysatoren, Polyethylenhomo- vor allem aber -copolymere mit besonders guten mechanischen Eigenschaften und gleichzeitig hoher Blasenstabilität erhalten werden können. Die erhaltenen Filmprodukte zeichnen sich zudem durch ein sehr geringes Stippenniveau aus.

Im Hinblick auf den Stand der Technik war es nicht zu erwarten gewesen, dass mit Hilfe dieser Massnahme die gesteckten Ziele, gute mechanischen Eigenschaften bei gleichzeitig hoher Blasenstabilität der Folien aus den erfindungsgemäßen Ethylenhomopolymerisaten und -copolymerisaten, erreicht werden kann.

Ein weiterer Gegenstand der Erfindung ist ein Verfahren zur Herstellung von Ethylenhomopolymerisaten und -copolymerisaten mit α-Olefinen durch Polymerisation von Ethylen oder von Gemischen aus Ethylen und α-Olefinen unter Verwendung von mindestens einem erfindungsgemässen Chrom-Katalysator, die daraus erhältlichen Ethylenhomopolymerisate und -copolymerisate und deren Verwendung zur Herstellung von Folien.

Ein erfindungsgemäss wesentlicher Bestandteil des erfindungsgemässen Chrom-Katalysators ist das sphärische, sprühgetrocknete, oxidische Trägermaterial.

Das sphärische, sprühgetrocknete, oxidische Trägermaterial im folgenden der Kürze halber einfach als Trägermaterial bezeichnet, ist üblicherweise ein poröser, anorganischer Feststoff der noch Hydroxygruppen enthalten kann. Beispiele für diese Feststoffe, die im übrigen dem Fachmann bekannt sind, sind Aluminiumoxid, Siliziumdioxid (Silicagel), Titandioxid oder deren Mischoxide, oder Aluminiumphosphat. Weitere geeignete Trägermaterialien können durch Modifizierung der Porenoberfläche z.B. mit Verbindungen der Elemente Bor (BE-A-61,275), Aluminium (US 4,284,5,27), Silizium (EP-A 0 166 157) oder Phosphor (DE-A 36 35 715) erhalten werden. Bevorzugt wird ein Silicagel verwendet.

Das bevorzugte Trägermaterial wird u.a. durch Sprühtrocknung von vermahlenen, entsprechend gesiebten Hydrogelen, welche hierzu mit Wasser oder einem aliphatischen Alkohol vermischt werden, hergestellt. Bei den sogenannten Primärpartikeln handelt es sich um poröse, granuläre Partikel aus dem entsprechend gemahlenen und gesiebten Hydrogel mit einem mittleren Teilchendurchmesser von 1 bis 20 µm, bevorzugt 1 bis 5 µm. Bevorzugt werden gemahlene und gesiebte SiO₂-Hydrogel verwendet.

Im allgemeinen liegt der mittlere Teilchendurchmesser der Trägerteilchen im Bereich von 10 und 1000 µm, bevorzugt im Bereich von 20 bis 120 µm, und besonders bevorzugt im Bereich von 30 bis 100 µm.

Das Porenvolumen des verwendeten Trägermaterials liegt im Bereich von 0,5 bis 3 ml/g, bevorzugt von 1 bis 2 ml/g und besonders bevorzugt von 1 bis 1,6 ml/g.

Ausserdem ist es erfindungsgemäss von Vorteil, wenn die Trägerteilchen eine spezifische Oberfläche von 50 bis 600 m²/g aufweisen. Werden Trägergelteilchen von geringerer spezifischer Oberfläche verwendet, so wird die katalytische Wirksamkeit der betreffenden Chrom-Katalysatoren im allgemeinen verringert. Dagegen haben Chrom-Katalysatoren auf der Basis von Trägergelteilchen einer spezifischen Oberfläche von > 600 m²/g meist eine vergleichsweise geringe Abriebfestigkeit. Bevorzugt sind Trägergelteilchen mit einer spezifischen Oberfläche von 300 bis 600 m²/g und besonders bevorzugt von 300 bis 550 m²/g.

Die spezifische Oberfläche und das mittlere Porenvolumen werden durch Stickstoff-Adsorption gemäss der BET Methode, wie z.B. in S. Brunauer, P. Emmett und E. Teller im Journal of the American Chemical Society, 60, (1939), Seite 209-319 beschrieben, bestimmt.

Die erfindungsgemäss verwendeten Trägerteilchen besitzen ausserdem einen mittleren Porendurchmesser von 80 bis 250 Å, bevorzugt von 90 bis 210 Å und besonders bevorzugt von 95 bis 200 Å. Der mittlere Porendurchmesser in Å wird errechnet, indem man den Zahlenwert des mittleren Porenvolumen (in cm³/g) durch den Zahlenwert der spezifischen Oberfläche (in m²/g) teilt und diesen Wert mit 40000 multipliziert.

Die Herstellung und Eigenschaften geeigneter Trägermaterialien ist z.B. WO 97/48743 und den darin zitierten Schriften zu entnehmen. Geeignete Trägermaterialien sind auch im Handel bekannt und erhältlich.

Das Trägermaterial kann vor der Verwendung in dem erfindungsgemässen Verfahren auch schon partiell oder ganz modifiziert werden. Das Trägermaterial kann z.B. unter oxidierenden oder nichtoxidierenden Bedingungen bei Temperaturen von 200 bis 1000°C, gegebenenfalls in Gegenwart von Fluorierungsmitteln, wie beispielsweise Ammoniumhexafluorosilikat, behandelt werden. So kann unter anderem der Wasser- und/oder OH-Gruppengehalt variiert werden. Bevorzugt wird das Trägermaterial vor seiner Verwendung im erfindungsgemässen Verfahren im Vakuum 1 bis 10 Stunden bei 100 bis 200°C getrocknet.

In Schritt A) wird das Trägermaterial in einer Suspension mit einer Titanverbindung kontaktiert. Als Titanverbindung wird bevorzugt eine vierwertige Verbindung der Formel (RO)ₙX₄-ₙTi eingesetzt, wobei die Reste R gleich oder verschieden sind und aus einem Si- oder C-organischen Substituenten mit 1 bis 20 C-Atomen bestehen, wie z.B. einem C₁-C₂₀ linearem, verzweigten oder cyclischen Alkyl wie z.B. Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, Cyclohexyl, n-Heptyl und n-Octyl, einem C₆-C₁₈-Aryl, wie z.B. Phenyl, 1-Naphthyl, 2-Naphthyl, 1-Anthryl, 2-Anthryl, 9-Anthryl und 1-Phenanthryl oder einem Trialkylsilyl, wie z.B. Trimethylsilyl oder Triethylsilyl. Bevorzugt ist R ein lineares oder verzweigtes C₁-C₆ Alkyl wie z.B. Methyl, Ethyl, n-Propyl, iso-Propyl, n-Butyl, sec.-Butyl, iso-Butyl, tert.-Butyl, n-Pentyl oder n-Hexyl. Als X kommen Halogene wie Fluor, Chlor, Brom oder Jod in Betracht, bevorzugt Chlor. n ist eine Zahl von 0 bis 4 und bevorzugt 4. Bevorzugt ist die Titanverbindung im Suspensionsmittel löslich, daher werden Titantetraalkoxide bevorzugt eingesetzt, weil sie in sehr vielen Lösungsmitteln gute Löslichkeiten besitzen. Als Suspensionsmittel.eignen sich besonders C₄bis C₈-Alkane wie Isobutan, Isopentan, n-Pentan, n-Hexan, n-Heptan oder n-Octan.

Meist wird das Trägermaterial mit dem Suspendiermittel aufgeschlämmt und dazu die Titanverbindung zugegeben. Es ist jedoch z.B. auch möglich die Titanverbindung im Suspendiermittel zu lösen und anschliessend zum Trägermaterial zuzugeben. Bevorzugt wird das Trägermaterial vor Zugabe der Titanverbindung mit dem Suspendiermittel und und gewünschtenfalls einer Säure, bevorzugt einer C₁-C₆ Carbonsäure, wie Ameisensäure oder Essigsäure und besonders bevorzugt Ameisensäure für 10 bis 120 Minuten aufgeschlämmt.

Im allgemeinen erfolgt die Beladung in einem Gewichtsverhältnis von Trägergelteilchen:Ti von 100:0,1 bis 100:12, insbesondere 100:1 bis 100:6.

Reaktionsschritt A) kann bei Temperaturen von 0 bis 100°C durchgeführt werden. Aus Kostengründen wird Raumtemperatur bevorzugt.
Vor dem anschliessenden Schritt B) kann das Lösungsmittel und/oder die Säure ganz oder teilweise abdestilliert werden. Bevorzugt wird der titanisierte Träger aus Schritt A) vor der weiteren Umsetzung isoliert und von Suspendiermittel und Säure weitgehend befreit.

In Reaktionschritt B) wird die aus A) erhaltene Zwischenstufe in einer Suspension mit einer Chromsalzlösung kontaktiert und anschliessend das Lösungsmittel entfernt.

Beispiele geeigneter Chromverbindungen sind ausser Chromtrioxid und Chromhydroxid Salze des dreiwertigen Chroms mit organischen und anorganischen Säuren wie Chromacetat, -oxalat, -sulfat und -nitrat sowie Chelate des dreiwertigen Chroms wie Chromacetylacetonat. Hiervon werden Chrom(III)-nitrat-9-hydrat und Chromacetylacetonat ganz besonders bevorzugt verwendet.

Vorzugsweise wird die aus A) erhaltene Zwischenstufe in Wasser oder Methanol mit der Chromverbindung kontaktiert. Bevorzugt wird hierbei die Chromkomponente in Wasser oder Methanol gelöst und anschliessend mit der Zwischenstufe aus A) vermischt. Die Reaktionzeit liegt hierbei zwischen 10 Minuten bis 5 Stunden.

Im allgemeinen erfolgt die Beladung in einem Gewichtsverhältnis von Trägergelteilchen:Chrom von 100:0,1 bis 100:10, insbesondere 100:0,3 bis 100:3.

Anschliessend wird das Lösungsmittel, vorzugsweise bei Temperaturen von 20 bis 150°C und Drücken von 10 mbar bis 1 mbar entfernt. Der so erhaltene Präkatalysator kann vollständig trocken sein oder eine gewisse Restfeuchte aufweisen. Allerdings sollen die flüchtigen Bestandteile nicht mehr als 20, insbesondere nicht mehr als 10 Gew.-%, bezogen auf den noch nicht aktivierten chromhaltigen Präkatalysator, betragen.

Der aus Reaktionsschritt B) erhaltene Präkatalysator kann gleich Schritt D) unterzogen werden oder aber vorher in Schritt C) in einer wasserfreien Inertgasatmosphäre bei Temperaturen grösser 280°C calciniert werden. Bevorzugt wird die Calcinierung bei Temperaturen zwischen 280 und 800°C in einem Wirbelbett für 10 bis 1000 Minuten durchgeführt.

Die so erhaltene Zwischenstufe aus Schritt B) oder C) wird dann in Schritt D) unter oxidierenden Bedingungen, beispielsweise in einer sauerstoffhaltigen Atmosphäre bei Temperaturen von 400 bis 1000°C aktiviert. Vorzugsweise wird die aus Schritt B) oder C) erhaltene Zwischenstufe im wirbelbett direkt durch Austausch des Inertgases gegen ein sauerstoffhaltiges Gas und durch Erhöhung der Temperatur auf die Aktivierungstemperatur aktiviert. Vorteilhafterweise wird hierbei in einem wasserfreien, Sauerstoff in einer Konzentration von über 10 Vol.-% enthaltenden Gasstrom während 10 bis 1000 Minuten, insbesondere 150 bis 750 Minuten, auf 400 bis 1000°C, insbesondere 500 bis 800°C, erhitzt und danach auf Raumtemperatur abgekühlt, wodurch der erfindungsgemäss zu verwendende Phillipskatalysator resultiert. Die Maximaltemperatur der Aktivierung ist dabei unterhalb, bevorzugt mindestens 20 bis 100°C unterhalb der Sintertemperatur der Zwischenstufe aus Schritt B), bzw. C). Diese Oxidation kann auch in Gegenwart geeigneter Fluorierungsmittel, wie beispielsweise Ammoniumhexafluorsilikat, erfolgen.

Der erfindungsgemässe Chrom-Katalysator weist vorteilhafterweise einen Chromgehalt von 0,1 bis 5 und insbesondere 0,3 bis 2 Gew.-% und einen Titangehalt von 0,5 bis 10 und insbesondere 1 bis 5 Gew.-% auf.

Die erfindungsgemässen Katalysatorsysteme zeichnen sich durch eine geringe Induktionsperiode bei der Alk-1-enpolymerisation aus.

Der resultierende erfindungsgemäss zu verwendende Chrom-Katalysator kann vor seiner Verwendung auch noch in Suspension oder in der Gasphase reduziert werden, beispielsweise durch Ethylen und/oder α-Olefine, Kohlenmonoxid oder Triethylboran oder er kann durch Silylierung modifiziert werden. Das molare Verhältnis von Reduktionsmittel zu Chrom (des zu reduzierenden erfindungsgemäßen Chrom-Katalysators) liegt üblicherweise im Bereich von 0,05:1 bis 500:1, vorzugsweise 0,1:1 bis 50:1, insbesondere von 0,5:1 bis 5,0:1.

In Suspension liegt die Reduktionstemperatur im allgemeinen im Bereich von 10 bis 200°C, vorzugsweise im Bereich von 10 bis 100°C und der Druck im Bereich von 0,1 bis 500 bar, vorzugsweise im Bereich von 1 bis 200 bar.

Die Reduktionstemperatur im Wirbelschichtverfahren liegt üblicherweise im Bereich von 10 bis 1000°C, vorzugsweise 10 bis 800°C, insbesondere 10 bis 600°C. In der Regel führt man die Gasphasenreduktion im Druckbereich von 0,1 bis 500 bar, vorzugsweise im Bereich von 1 bis 100 bar und insbesondere im Bereich von 5 bis 20 bar durch.

Bei der Gasphasenreduktion wird im allgemeinen der zu reduzierende Chrom-Katalysator in einem Wirbelbettreaktor mit einem inerten Trägergasstrom, beispielsweise Stickstoff oder Argon, gewirbelt. Der Trägergasstrom wird üblicherweise mit dem Reduktionsmittel beladen, wobei unter Normalbedingungen flüssige Reduktionsmittel vorzugsweise einen Dampfdruck von mindestens 1 mbar haben.

Der erfindungsgemässe Chrom-Katalysator eignet sich hervorragend für die Herstellung von Homopolymerisaten des Ethylens und Copolymerisaten des Ethylens mit α-Olefinen in den üblichen, für die Polymerisation von Olefinen bekannten Verfahren bei Temperaturen im Bereich von 20 bis 300°C und unter Drücken von 5 bis 400 bar, wie Lösungsverfahren, Suspensionsverfahren im Rührautoklaven oder im Schleifenreaktor, gerührte Gasphase oder Gasphasenwirbelschichtverfahren, die kontinuierlich oder auch diskontinuierlich durchgeführt werden. Die vorteilhaften Druck- und Temperaturbereiche zur Durchführung des Verfahrens hängen demgemäss stark von der Polymerisationsmethode ab.

Insbesondere werden in diesen Polymerisationsverfahren Temperaturen zwischen 50 und 150°C, vorzugsweise zwischen 70 und 120°C, und Drücke i.a. im Bereich von 1 bisw400 bar eingestellt. Als Lösungsmittel oder Suspensionsmittel können inerte Kohlenwasserstoffe, wie iso-Butan, oder aber die Monomeren selbst, wie beispielsweise höheren Olefine wie z.B. Propen, Buten oder Hexen in verflüssigtem oder flüssigem Zustand verwendet werden. Der Feststoffgehalt der Suspension liegt i.a. im Bereich von 10 bis 80 Gew.%. Es kann sowohl diskontinuierlich, z.B. in Rührautoklaven, als auch kontinuierlich, z.B. in Rohrreaktoren, bevorzugt in Schleifreaktoren, gearbeitet werden. Insbesondere kann nach dem Phillips-PF-Verfahren, wie in der US-3 242 150 und US-3 248 179 beschrieben, gearbeitet werden.

Von den genannten Polymerisationsverfahren ist erfindungsgemäss die Gasphasenpolymerisation, insbesondere in Gasphasenwirbelschicht-Reaktoren bevorzugt. Es hat sich gezeigt, dass trotz der vielfältigen Bearbeitungsschritte und der sprühgetrockneten Trägermaterialien kein Feinstaub während der Gasphasenpolymerisation gebildet wird. In der Regel wird dort eine Temperatur eingestellt, die mindestens einige Grad unter der Erweichungstemperatur des Polymerisates liegt. Die Gasphasenpolymerisation kann auch in der sogenannten condensed, supercondensed oder superkritischen Fahrweise durchgeführt werden.

Die verschiedenen oder auch gleichen Polymerisationsverfahren können auch wahlweise miteinander in Serie geschaltet sein und so eine Polymerisationskaskade bilden. Die besondere Katalysatorzusammensetzung ermöglicht es jedoch ohne weiteres die erfindungsgemässen Polymerisate aus einem einzigen Reaktor zu erhalten.

Beispiele für geeignete α-Olefine, welche mit Ethylen copolymerisiert werden können, sind Mono- und Diolefine mit drei bis 15 Kohlenstoffatomen im Molekül. Gut geeigneter α-Olefine dieser Art sind Propen, 1-Buten, 1-Penten, 1-Hexen, 1-Octen, 1-Decen, 1-Dodecen oder 1-Pentadecen sowie die konjugierten und nicht konjugierten Diolefine Butadien, Penta-1,3-dien, 2,3-Dimethylbutadien, Penta-1,4-dien, Hexa-1,5-dien und Vinylcyclohexen. Auch Mischungen dieser Comonomeren können verwendet werden. Vorzugsweise verwendet man 1-Buten, 1-Hexen oder 1-Octen und insbesondere 1-Hexen.

Zur Steuerung der Molmasse kann vorteilhaft Wasserstoff als Reglersubstanz bei der Polymerisation eingesetzt werden.

Es hat sich als vorteilhaft erwiesen, die Polymerisation der Alk-1-ene mit den erfindungsgemässen Katalysatoren in Gegenwart von Organometallverbindungen der ersten, zweiten, dritten oder vierten Hauptgruppe oder der zweiten Nebengruppe-des Periodensystems der Elemente durchzuführen. Gut geeignete derartige Verbindungen sind homoleptische C₁- bis C₁₀-Alkyle des Lithiums, Bors, Aluminiums oder Zinks wie n-Butyllithium, Triethylbor, Trimethylaluminium, Triethylaluminium, Triisobutylaluminium, Tributylaluminium, Trihexylaluminium, Trioctylaluminium und Diethylzink. Ferner sind auch noch C₁- bis C₁₀-Dialkylaluminiumalkoxide wie Diethylaluminiumethoxid gut geeignet. Weiterhin können Dimethylaluminiumchlorid, Methylaluminiumdichlorid, methyl-aluminiumsesquichlorid oder Diethylaluminiumchlorid eingesetzt werden. Besonders bevorzugt ist n-Butyllithium als Organometallverbindung. Auch Mischungen der oben beschriebenen Organometallverbindungen sind im allgemeinen gut geeignet, wobei das Mischungsverhältnis nicht kritisch ist.

Das molare Verhältnis Organometallverbindung:Chrom liegt üblicherweise im Bereich von 0,1:1 bis 50:1, vorzugsweise im Bereich von 1:1 bis 50:1. Da viele der Aktivatoren, wie z.B. Aluminiumalkyle jedoch auch gleichzeitig zur Entfernung von Katalysatorgiften verwendet werden (sogenannte scavenger), ist die eingesetzte Menge von der Verunreinigung der übrigen Einsatzstoffe abhängig. Der Fachmann kann jedoch durch einfaches Probieren die optimale Menge bestimmen.

Die erfindungsgemässen Chrom-Katalysatoren können auch zusammen mit einem anderen zur Polymerisation von α-Olefinen geeigneten Katalysator in den obigen Polymerisationsverfahren verwendet werden. Bevorzugt wird der erfindungsgemässe Chrom-Katalysator zusammen mit einem anderen, für die Polymerisation von α-Olefinen üblichen, geträgerten Chrom-Katalysator verwendet. Der Einsatz von zwei verschiedenen geträgerten Chrom-Katalysatoren ist z.B. in WO 92/17511 beschrieben. Auch können zwei oder mehr der erfindungsgemäßen Chrom-Katalysatoren gleichzeitig polymerisiert werden. Besonders bevorzugt wird zur Polymerisation ein erfindungsgemäßer Chrom-Katalysator zusammen mit einem geträgerten, nicht titanisierten Chrom-Katalysator, welcher durch ein Verfahren herstellbar ist, in dem ein sphärisches, sprühgetrocknetes Trägermaterial gemäß den oben beschriebenen Schritten B) bis D) behandelt wird, eingesetzt. Die bevorzugten Ausführungsformen dieses nicht titanisierten, geträgerten Chrom-Katalysators sind üblicherweise gleich wie für den erfindungsgemäßen titanisierten Chrom-Katalysator. Die Aktivierung der beiden Katalysatoren kann getrennt oder gemeinsam erfolgen. Das mengenmässige Verhältnis von nicht titanisiertem zu titanisierten Chrom-Katalysator liegt im Bereich von 3:1 bis 1:3, bevorzugt von 2:1 bis 1:3 und besonders bevorzugt von 1:1 bis 1:2. Vorzugsweise werden die beiden Katalysatoren zuerst gemischt und dann gemeinsam aktiviert. Diese Kombination ergibt besonders vorteilhafte Filmprodukte mit guten Blasenstabilitäten und guten mechanischen Eigenschaften. Mischungen aus titanisierten und nicht titanisierten geträgerten Chrom-Katalysatoren sind z.B. in US-3 798 202 beschrieben, wobei hier jedoch die Titanisierung erst nach der Trägerung der Chromkomponente erfolgt. Solch eine Reihenfolge zeigt die erfindungsgemässen Vorteile für die vorliegenden Trägermaterialien nicht.

Die beiden verschiedenen Phillips-Katalysatoren, der titanisierte und der nicht titanisierte Chrom-Katalysator können, bevor sie mit dem Monomeren in Berührung kommen, vermischt werden und dann gemeinsam in den Reaktor dosiert werden, oder sie können getrennt voneinander zum Beispiel an mehreren Stellen in den Reaktor dosiert werden.

Die erfindungsgemässen Homo- und copolymerisate des Ethylens haben üblicherweise eine Dichte, gemessen nach DIN 53479, im Bereich von 0,9 bis 0,97 g/cm³, vorzugsweise im Bereich von 0,92 bis 0,96 g/cm³ und besonders bevorzugt im Bereich von 0,925 bis 0,945 g/cm³ und eine Schmelzflussrate (Melt Flow Index, MFI (190°C/2,16 kg), bzw. HLMI (190°C/21,6 kg)), gemessen nach DIN 53735 unter unterschiedlichen Belastungsgewichten (in Klammern), wobei der MFI im Bereich von 0 bis 10 g/10 min, vorzugsweise im Bereich von 0,01 bis 1 g/10 min und besonders bevorzugt im Bereich von 0,05 bis 0,6 g/10 min und der HLMI im Bereich von 1 bis 50 g/10 min, vorzugsweise im Bereich von 3 bis 30 g/10 min und besonders bevorzugt im Bereich von 5 bis 25 g/10 min ist.

Das Gewichtsmittel der Molmasse Mw liegt im allgemeinen im Bereich von 10000 bis 7000000, vorzugsweise im Bereich von 100000 bis 500000 g/mol. Die Molmassenverteilung Mw/Mn, gemessen nach der Methode der GPC (Gelpermeationschromatographie) bei 135°C in 1,2,4-Trichlorbenzol gegen Polyethylenstandard, liegt üblicherweise im Bereich von 3 bis 50, vorzugsweise im Bereich von 8 bis 30, und besonders bevorzugt im Bereich von 15 bis 30.

Im allgemeinen werden die im Reaktor erzeugten Polymerisate des Ethylens in einem Extruder aufgeschmolzen und homogenisiert. Die Schmelzflussrate und die Dichte des Extrudats können sich dann von den entsprechenden Grössen des Rohpolymerisats unterscheiden, liegen aber weiterhin im erfindungsgemässen Bereich.

Bei der Olefinpolymerisation, bei der der erfindungsgemäss hergestellte Katalysator eingesetzt wird, können Homopolymere von Ethylen oder Copolymere von Ethylen mit einem Comonomer mit 3 bis 12 C-Atome in einer Menge von bis zu 10 Gew.-% Comonomer hergestellt werden. Bevorzugt Copolymere enthalten von 0,3 bis 1,5 Mol.-% Hexen, bezogen auf das Polymere und besonders bevorzugt 0,5 bis 1 Mol.-% Hexen.

Das erfindungsgemässe Ethylencopolymer kann mit anderen Olefinpolymeren, insbesondere Ethylenhomo- und copolymeren auch Mischungen bilden. Diese Mischungen können einerseits durch das oben beschriebene gleichzeitige polymerisieren mehrerer Chrom-Katalysatoren hergestellt werden. Andererseits kann man diese Mischungen auch einfach durch nachträgliches Blenden der erfindungesgemäßen Polymere mit anderen Ethylenhomopolymerisaten bzw. -copolymerisaten erhalten. Bevorzugt sind Mischungen, bei denen ein Teil durch Polymerisation mit einem erfindungsgemäßen Chrom-Katalysator herstellbar ist und der zweite Teil durch Polymerisation mit einem geträgerten, nicht titanisierten Chrom-Katalysator, welcher durch ein Verfahren beinhaltend die Schritte B) bis D) herstellbar ist, herstellbar ist. MFI, HLMI, Dichte, Comonomergehalt, Mw und Mw/Mn dieser Mischungen liegen bevorzugt ebenfalls in dem Bereich der Polymerisate, welche mit nur einem der erfindungsgemässen titanhaltigen Chrom-Katalysatoren hergestellt werden.

Die Ethylencopolymere, Polymermischungen und Blends können außerdem noch an sich bekannte Hilfs- und/oder Zusatzstoffe enthalten, wie Verarbeitungsstabilisatoren, Stabilisatoren gegen Licht- und Wärmeeinflüsse, übliche Additive wie Gleitmittel, Antioxidationsmittel, Antiblockmittel und Antistatika, sowie gegebenenfalls Farbstoffe. Art und Menge dieser Zusatzstoffe sind dem Fachmann geläufig.

Die erfindungsgemässen Polymere können auch nachträglich noch modifiziert werden durch Grafting, Vernetzung, Hydrierung, Funktionalisierung oder andere Funktionalisierungsreaktionen, die dem Fachmann bekannt sind.

Die erfindungsgemässen Polymerisate eignen sich z.B. hervorragend zur Herstellung von Folien auf Blasfolienanlagen bei hohen Ausstossleistungen. Folien, welche die erfindungsgemäßen Polymerisate enthalten, zeichnen sich durch gute mechanische Eigenschaften aus. Bemerkenswert ist auch die hohe Blasenstabilität bei der Herstellung der Folien im Blasverfahren.

Die so erhaltenen Folien eignen sich insbesondere für den Verpakkungsbereich sowohl für hochbeanspruchbare Schwersackverpackungen als auch für den Lebensmittelbereich. Weiterhin zeigen die Folien nur geringe Blockneigung und sind daher auch ohne oder mit nur geringen Gleit- und Antiblockmittelzusätzen maschinengängig.

Der erfindungsgemässe Phillips-Katalysator weist besondere unerwartete Vorteile auf. Er eignet sich hervorragend für die Homo- und copolymerisation des Ethylens nach den üblichen und bekannten particle-form-Verfahren in einer Gasphasenwirbelschichtpolymerisation. Hierbei liefert er mit hoher Produktivität (Co)Polymerisate von vorzüglicher Morphologie und guter Verarbeitbarkeit mit Schmelzflussindices von 0 bis 1 g/10 min, highload Schmelzflussindices von 1 bis 50 g/10 min und Schmelzflussverhältnissen (HLMI/MI) von 50 bis 200, welche bei der Verarbeitung nach dem Blasfolienextrusionsverfahren beim Austritt aus der Extruderdüse nur ein sehr geringes Schwellen zeigen. Die mit Hilfe des erfindungsgemässen Phillips-Katalysators hergestellten (Co)Polymerisate eignen sich daher besonders hervorragend für die Verarbeitung nach dem Folienblas- und Blasformverfahren.

Die folgenden Beispiele erläutern die Erfindung.

Die Produktivität des Katalysators P/K bezieht sich auf die Menge isoliertes Polymerisat pro Menge eingesetztem Phillips-Katalysator in g.

Der Comonomergehalt der Ethylen/Alk-1-encopolymerisate (%C₆), dessen Methylseitenketten-Gehalt pro 1000 C-Atome der Polymerkette (CH₃/1000) und dessen Dichte wurde durch IR Spektroskopie bestimmt.

Der Eta-Wert wurde mit einem automatischen Ubbelohde Viskometer (Lauda PVS 1) mit Dekalin als Lösungsmittel bei 130°C bestimmt (ISO1628 bei 130°C, 0,001 g/ml Decalin).

Die Bestimmung der Molmassenverteilungen und der daraus abgeleiteten Mittelwerte Mn, Mw und Mw/Mn erfolgte mittels Hochtemperatur-Gelpermeations-chromatographie in Anlehnung an DIN 55672 unter folgende Bedingungen: Lösungsmittel: 1,2,4-Trichlorbenzol, Fluss: 1ml/min, Temperatur: 135°C, Kalibrierung mit PE Standards.

Der Dyna-wert wurde nach DIN 53373 bestimmt.

Der HLMI wurde nach ISO 1133 bestimmt.

Der Dar Drop wurde nach ASTM D12709/A bestimmt.

Die Dichte wurde nach ISO 1183 bestimmt.

### Abkürzungen in den folgenden Tabellen:

- T: Temperatur während der Polymerisation
- Mw: Gewichtsmittel der Molmasse
- Mn: Zahlenmittel der Molmasse
- Eta: Viskosität
- Dichte: PolymerdichteMw Gewichtsmittel der Molmasse
- HLMI: Schmelzflussindex bei 190°C und 21,6 kg
- MI: Schmelzflussindex bei 190°C und 2,16 kg
- %C₆: Comonomergehalt des Polymeren

### Beispiele und Vergleichsversuche

### Beispiel 1: Herstellung eines erfindungsgemässen Katalysators

Als Träger wurde ein sprühgetrocknetes Kieselgel mit einer BET-Oberfläche-von 520 m²/g und einem Porenvolumen von 1,26 ml/g verwendet.

Derartige Trägermaterialien sind beispielsweise von der Firma Grace unter der Bezeichnung Sylopol® 2101 kommerziell erhältlich. 15 kg des Silicagels wurden 7 h im Vakuum (<10 mbar) bei 130°C getrocknet. Nach dem Abkühlen wurde eine Lösung aus 0,5 1 Ameisensäure in 40 l Heptan zugeben und 30 min nachgerührt. Anschliessend wurden 3,9 l Titantetraisopropylat unter Rühren zugeben. Nach einer Stunde wurde das Lösungsmittel abdestilliert. Anschliessend wurde der (titanisierte) Träger mit einer Lösung aus 600 g Chromnitrat (Cr(NO₃)₃*9H₂O) in 20 l Methanol versetzt, eine Stunde gerührt und danach das Lösungsmittel abdestilliert. Der so erhaltene Präkatalysator enthält 0,5 Gew.% Chrom und 3,6 Gew.% Titan.

Der Präkatalysator wurde in einer Gasphasenwirbelschicht aktiviert. Hierbei wurde unter Wirbeln mit Luft bis zur gewünschten Endtemperatur von 650°C aufgeheizt. Bei der Endtemperatur wurde 10 Stunden gehalten, anschliessend wieder auf Stickstoff umgestellt und abgekühlt.

### Beispiel 2 und 3: Gasphasenpolymerisation

Die Polymerisation wurde in einem Wirbelschichtreaktor von 0,5 m Durchmesser durchgeführt. Die Reaktortemperatur ist in Tabelle 1 angegeben, der Druck im Reaktor war 21 bar. Das Reaktorgas hatte folgende Zusammensetzung: 56 Vol.% Ethen, 2 Vol% Hexan und die in Tabelle 1 angegebene Menge Vol.% 1-Hexen. Der Stickstoffgehalt (in Vol%) läßt sich daraus einfach durch 42 minus der in Tabelle 1 angegebenen Menge Hexen (in Vol%) errechnen. Als Katalysator diente der Katalysator gemäss Beispiel 1.

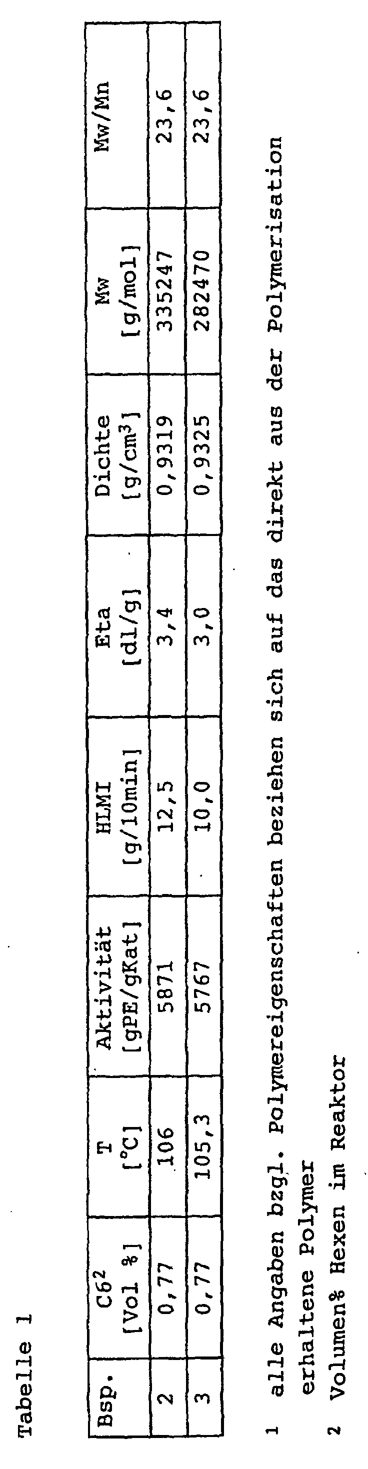

### Vergleichsbeispiel V1:

Als Träger wurde das granuläre Kieselgel Sylopol® 332 der Fa. Grace mit einer BET-Oberfläche von 325 m²/g und einem Pörenvolumen von 1,79 ml/g verwendet. 18 kg des Kieselgels wurden mit einer Lösung von 280 g Chromnitrat in 30 l Methanol versetzt und das Lösungsmittel abdestilliert. Der so erhaltene Präkatalysator enthält 0,2 Gew.% Chrom.

Dieser Präkatalysator wurde in einer Gasphasenwirbelschicht calciniert. Hierbei wurde auf die Endtemperatur von 700°C aufgeheizt, 10 Stunden bei dieser Temperatur gehalten und anschließend wieder auf Stickstoff umgestellt und abgekühlt. Die Polymerisation erfolgte in der Gasphase analog den Beispielen 2 und 3 mit 0,32 Vol.% Hexen bei 110°C.

### Vergleichsbeispiel V2:

Als Präkatalysator wurde der kommerziell erhältliche Katalysator EP 350 HiTi (Grace) verwendet, ein granuläres Kieselgel, das 1 Gew% Chrom und 3 Gew% Titan enthält und eine BET-Oberfläche von 502 m²/g und ein Porenvolumen von 1,95 ml/g besitzt.

Der Präkatalysator wurde in einer Gasphasenwirbelschicht calciniert. Hierbei wurde auf die Endtemperatur von 575°C aufgeheizt, 10 Stunden bei dieser Temperatur gehalten und anschließend wieder auf Stickstoff umgestellt und abgekühlt. Die Polymerisation erfolgte in der Gasphase analog den Beispielen 2 und 3 mit 0,32 Vol.% Hexen bei 109°C.

### Vergleichsbeispiel V3:

Als Träger wurde das sprühgetrocknete Kieselgel aus Beispiel 1 mit einer BET-Oberfläche von 520 m²/g und einem Porenvolumen von 1,26 ml/g verwendet. 18 kg des Kieselgels wurden mit einer Lösung von 420 g Chromnitrat in 23 l Methanol versetzt und das Lösungsmittel abdestilliert. Der so erhaltene Präkatalysator enthält 0,3 Gew.% Chrom.

Der Präkatalysator wurde in einer Gasphasenwirbelschicht calciniert. Hierbei wurde auf die Endtemperatur von 750°C aufgeheizt, 2 Stunden bei dieser Temperatur gehalten und anschließend wieder auf Stickstoff umgestellt und abgekühlt. Die Polymerisation erfolgte in der Gasphase analog den Beispielen 2 und 3 mit 0,33 Vol.% Hexen bei 107, 4°C.

### Vergleichsbeispiel V4:

Der Präkatalysator wurde analog Vergleichsbeispiel V3 hergestellt.

Der Präkatalysator wurde in einer Gasphasenwirbelschicht calciniert. Hierbei wurde auf die Endtemperatur von 750°C aufgeheizt, 10 Stunden bei dieser Temperatur gehalten und anschließend wieder auf Stickstoff umgestellt und abgekühlt. Die Polymerisation erfolgte in der Gasphase analog den Beispielen 2 und 3 mit 0,39 Vol.% Hexen bei 107,5°C.

### Vergleichsbeispiel V5:

Als Träger wurde ein sprühgetrocknetes Kieselgel mit einer BET-Oberfläche von 310 m²/g und einem Porenvolumen von 1,54 ml/g verwendet. 18 kg des Kieselgels wurden mit einer Lösung von 720 g Chromnitrat in 23 l Methanol versetzt und das Lösungsmittel abdestilliert. Anschliessend wurde eine Lösung aus in 20 l Heptan und 3,5 l Titanisopropylat unter Rühren zugeben. Nach einer Stunde wurde das Lösungsmittel abdestilliert. Der so erhaltene Präkatalysator enthält 0,5 Gew.% Chrom und 3 Gew% Titan.

Der Präkatalysator wurde in einer Gasphasenwirbelschicht calciniert. Hierbei wurde auf die Endtemperatur von 750°C aufgeheizt, 2 Stunden bei dieser Temperatur gehalten und anschließend wieder auf Stickstoff umgestellt und abgekühlt. Die Polymerisation erfolgte in der Gasphase analog den Beispielen 2 und 3 mit 0,9 Vol.% Hexen bei 105,8°C. Der Katalysator führte während der Polymerisation zu Brocken und Belägen im Reaktor.

### Beispiel 4: Herstellung eines erfindungsgemässen Katalysators

Als Träger wurde ein sprühgetrocknete Kieselgel (siehe V5) mit einer BET-Oberfläche von 310 m²/g und einem Porenvolumen von 1,54 ml/g verwendet.

18 kg des Silikagels wurden 7 h im Vakuum (<10 mbar) bei 130°C getrocknet. Nach dem Abkühlen wurde eine Lösung aus 20 l Heptan und 3,5 l Titanisopropylat unter Rühren zugeben. Nach einer Stunde wurde das Lösungsmittel abdestilliert. Anschliessend wurde der (titanisierte) Träger mit einer Lösung aus 720 g Chromnitrat (Cr(NO₃)₃*9H₂O) in 23 l Methanol versetzt, eine Stunde gerührt und danach das Lösungsmittel abdestilliert. Der so erhaltene Präkatalysator enthält 0,5 Gew.% Chrom und 3 Gew.% Titan.

Der Präkatalysator wurde in einer Gasphasenwirbelschicht calciniert. Hierbei wurde auf die Endtemperatur von 750°C aufgeheizt, 2 Stunden bei dieser Temperatur gehalten und anschließend wieder auf Stickstoff umgestellt und abgekühlt. Die Polymerisation erfolgte in der Gasphase analog den Beispielen 2 und 3 mit 0,9 Vol.% Hexen bei 105,7°C. Der Katalysator führte während der Polymerisation nicht zu Brocken und Belägen im Reaktor.

### Herstellung der Folie

### Vergleichsbeispiele V1 bis V4, V6 und Beispiel 2:

Zum Vergleich wurden granulierte PE-Griesse, die aus den erfindungsgemässen und nicht erfindungsgemässen Katalysatoren hergestellt wurden, zu Folien verarbeitet. Es wurden die Ethylencopolymere aus Beispiel 2 und V1 bis V4 verwendet. Ausserdem wurde ein handelsübliches Produkt (Finathene HF513 = Vergleichsbeispiel V6) auf die gleiche Art verarbeitet. Die folgende Tabelle 2 gibt einen Überblick über die Eigenschaften der PE-Granulate.

Die Granulierung wurde auf einer ZSK 40 (Werner & Pfleiderer) durchgeführt. Als Stabilisatoren wurden den PE-Chargen 500 ppm Irganox® 1076 und 1000 ppm Irgaphos® 168 (Ciba) zugesetzt. Die Temperatur der PE-Schmelze (Massetemperatur) lag bei 200°C bei einem Durchsatz von 100 kg/h.

Die Folienherstellung erfolgte auf einer Folienblasmaschine der Fa. Windmöller und Hölscher unter folgenden Einstellungen: Düsendurchmesser 100 mm, Düsenspalt 1,2 mm, Massentemperatur 225°C, einem Massedruck entsprechend Tabelle 2, Aufblasverhältnis 1:4, Halslänge 900 mm, Foliendicke 20 µm. Der Polymerisatdurchsatz betrug 50 kg/h.

Die erfindungsgemässen Polymerisate erzeugen einen niedrigen Massedruckaufbau am Extruderkopf der Folienblasmaschine, eine sehr gute Blasenstabilität und die Folien besitzen ein deutlich niedrigeres Stippenniveau.

Bei einer Folienherstellung mit dem Polimerisat aus Beispiel 2 konnte ohne Pumpen der Blase auch eine Folie mit einer Foliendicke von 5 µm, einem Aufblasverhältnis von 1:5 und mit einer Abzugsgeschwindigkeit von 110m/s hergestellt werden.

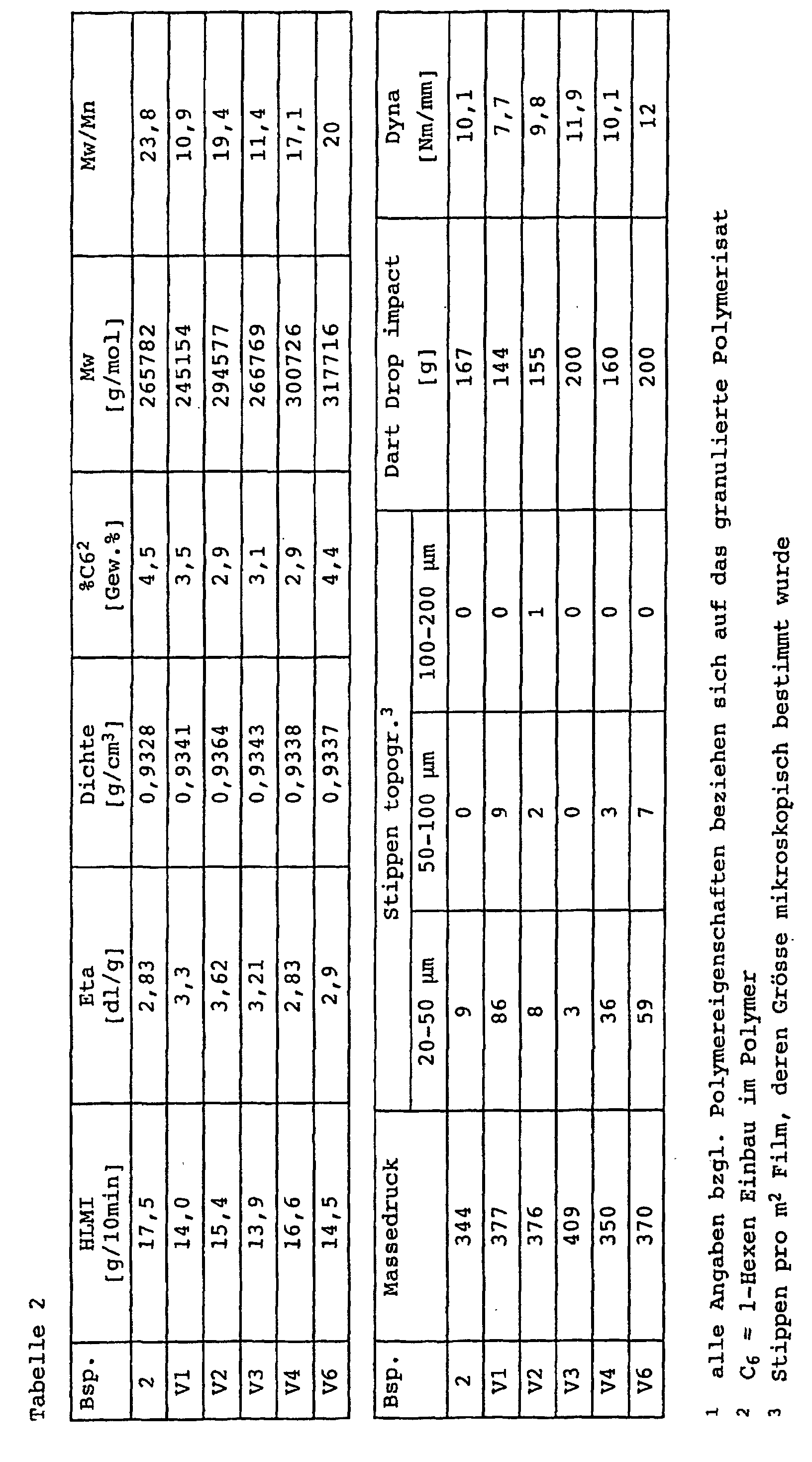

### Beispiel 5

Beispiel 4 wurde wiederholt, jedoch wurden 3,47 l Titantetraisopropylat in 28 l Heptan und 1443 g Chromnitrat (Cr(NO₃)₃*9H₂O) in 25 l Methanol verwendet. Der so erhaltene Präkatalysator enthielt 1 Gew% Cr und 3 Gew. % Ti.

Die Calcinierung erfolgte ebenfalls analog Beispiel 4, jedoch bei 580°C.

Die Polymerisation erfolgte in der Gasphase analog den Beispielen 2 und 3 mit 0,7 Vol.% Hexen bei 107°C. Es wurde ein Polymer mit einer Dichte von 0,936 g/cm³ (3,8 Gew.% C6 im Polymer), einem HLMI von 15,7 g/10 min, einem Eta-Wert von 2,63 dl/g, einem Mw von 238732 g/mol, einem Mw/Mn von 22,03 erhalten und daraus ein Film entsprechend den vorherigen Beispielen hergestellt. Der Massedruck bei der Extrusion betrug 328. Der Film hatte einen Dyna-Wert von 8 Nm/mm und einem Dart drop impact von 160 g.

### Beispiel 6

Beispiel 4 wurde wiederholt, jedoch wurden nur 720 g Chromnitrat (Cr(NO₃)₃*9H₂O) in 25 l Methanol verwendet und kein Titantetraisoproylat zugegeben. Der so erhaltene Präkatalysator enthielt 0,5 Gew% Cr.

Dieser Katalysator wurde mit dem Katalysator aus Beispiel 5 in der Menge 1:1 vermischt. Die Calcinierung der so erhaltenen Mischung erfolgte ebenfalls analog Beispiel 4, jedoch bei 550°C.

Die Polymerisation erfolgte in der Gasphase analog den Beispielen 2 und 3 mit 0,98 Vol.% Hexen bei 105,4°C. Es wurde ein Polymer mit einer Dichte von 0,9324 g/cm³ (4,9 Gew.% C6 im Polymer), einem HLMI von 9,2 g/10 min, einem Eta-Wert von 3,06 dl/g, einem Mw von 324844 g/mol, einem Mw/Mn von 26,45 erhalten und daraus ein Film entsprechend den vorherigen Beispielen hergestellt. Der Massedruck bei der Extrusion betrug 386. Der Film hatte einen Dyna-Wert von 12,4 Nm/mm und einem Dart drop impact von 197 g.

## Patentansprüche

1. Verfahren zur Herstellung von geträgerten, titanisierten Chrom-Katalysatoren, **dadurch gekennzeichnet, dass** es folgende Schritte umfasst:
A) Kontaktieren eines sphärischen, sprühgetrockneten, oxidischen Trägermaterials in einer Suspension mit einer Titanverbindung,
B) Kontaktieren des so behandelten Trägermaterials in einer Suspension mit einer Chromsalzlösung und anschliessendes Entfernen des Lösungsmittels,
C) optional Calcinierung des nach Schritt B) erhaltenen Präkatalysators in einer Inertgasatmosphäre bei Temperaturen grösser 280°C und anschließende
D) Aktivierung des nach Schritt B) oder C) erhaltenen Präkatalysators in einer sauerstoffhaltigen Atmosphäre bei Temperaturen von 500°C bis 800°C.

2. Verfahren nach Anspruch 1, **dadurch gekennzeichnet, dass** als oxidisches Trägermaterial ein Silicagel eingesetzt wird.

3. Verfahren nach Anspruch 1 oder 2, **dadurch gekennzeichnet, dass** das Porenvolumen des Trägermaterials bei 0,5 bis 3 ml/g liegt.

4. Verfahren nach den Ansprüchen 1 bis 3, **dadurch gekennzeichnet, dass** die spezifische Oberfläche des Trägermaterials bei 50 bis 600 m²/g liegt.

5. Verfahren nach den Ansprüchen 1 bis 4, **dadurch gekennzeichnet, dass** der mittlere Teilchendurchmesser des Trägermaterials bei 10 bis 1000 µm liegt.

6. Verfahren nach den Ansprüchen 1 bis 5, **dadurch gekennzeichnet, dass** das Trägermaterial vor Kontaktieren mit der Titanverbindung mit einer Säure aufgeschlämmt wird.

7. Geträgerter, titanisierter Chrom-Katalysator erhältlich nach dem Verfahren gemäß den Ansprüchen 1 bis 6.

8. Geträgerter, titanisierter Chrom-Katalysator nach Anspruch 7 mit einem Chromgehalt von 0,1 bis 5 Gew.-% und einem Titangehalt von 0,5 bis 10 Gew.-%.

9. Verfahren zur Herstellung von Ethylenhomopolymerisaten und -copolymerisaten mit α-Olefinen durch Polymerisation von Ethylen oder von Gemischen aus Ethylen und α-Olefinen, **dadurch gekennzeichnet, dass** man das Verfahren in Anwesenheit mindestens eines geträgerten, titanisierten Chrom-Katalysators gemäss Anspruch 7 oder 8 durchführt.

10. Verfahren nach Anspruch 9, **dadurch gekennzeichnet, dass** man das Verfahren in Anwesenheit eines geträgerten, titanisierten Chrom-Katalysators gemäss Anspruch 7 oder 8 und eines geträgerten, nicht titanisierten Chrom-Katalysators, welcher durch ein Verfahren herstellbar ist, in dem ein sphärisches, sprühgetrocknetes Trägermaterial gemäß den Schritten B) bis D) nach Anspruch 1 behandelt wird, durchführt.

11. Verfahren nach Anspruch 9 oder 10, **dadurch gekennzeichnet, dass** die Polymerisation in der Gasphase durchgeführt wird.

12. Ethylenhomopolymerisate und -copolymerisate mit α-Olefinen erhältlich durch ein Verfahren gemäß den Ansprüchen 9 bis 11.

13. Ethylenhomopolymerisate und -copolymerisate nach Anspruch 12, mit einem HLMI von 1 bis 50 g/10min, einem MFI (190°C/2,16 kg) von 0 bis 10 g/10min, einer Dichte von 0,9 bis 0,97 g/cm³, und einer Molmassenverteilung Mw/Mn im Bereich von 3 bis 50.

14. Verwendung der Ethylenhomopolymerisate und -copolymerisate gemäß Anspruch 12 oder 13 zur Herstellung von Folien.

15. Folien, enthaltend Ethylenhomopolymerisate und -copolymerisate gemäß Anspruch 12 oder 13.

## Claims

1. A process for preparing supported, titanized chromium catalysts, which comprises the following steps:
A) bringing a spherical, spray-dried, oxidic support material into contact with a titanium compound in a suspension,
B) bringing the support material which has been treated in this way into contact with a chromium salt solution in a suspension and subsequently removing the solvent,
C) if desired, calcining the precatalyst obtained in step B) at above 280°C in an inert gas atmosphere and subsequently
D) activating the precatalyst obtained in step B) or C) at from 500°C to 800°C in an oxygen-containing atmosphere.

2. A process as claimed in claim 1, wherein the oxidic support material used is a silica gel.

3. A process as claimed in claim 1 or 2, wherein the pore volume of the support material is from 0.5 to 3 ml/g.

4. A process as claimed in any of claims 1 to 3, wherein the specific surface area of the support material is from 50 to 600 m²/g.

5. A process as claimed in any of claims 1 to 4, wherein the mean particle size of the support material is from 10 to 1000 µm.

6. A process as claimed in any of claims 1 to 5, wherein the support material is slurried with an acid before being brought into contact with the titanium compound.

7. A supported, titanized chromium catalyst obtainable by a process as claimed in any of claims 1 to 6.

8. A supported, titanized chromium catalyst as claimed in claim 7 having a chromium content of from 0.1 to 5% by weight and a titanium content of from 0.5 to 10% by weight.

9. A process for preparing homopolymers of ethylene and copolymers of ethylene with α-olefins by polymerization of ethylene or of mixtures of ethylene and α-olefins, which is carried out in the presence of at least one supported, titanized chromium catalyst as claimed in claim 7 or 8.

10. A process as claimed in claim 9 carried out in the presence of a supported, titanized chromium catalyst as claimed in claim 7 or 8 and a supported, nontitanized chromium catalyst which can be prepared by a process in which a spherical, spray-dried support material is treated as described in steps B) to D) of claim 1.

11. A process as claimed in claim 9 or 10, wherein the polymerization is carried out in the gas phase.

12. A homopolymer of ethylene or a copolymer of ethylene with α-olefins obtainable by a process as claimed in any of claims 9 to 11.

13. A homopolymer or copolymer of ethylene as claimed in claim 12 which has an HLMI of from 1 to 50 g/10 min, an MFI (190°C/2.16 kg) of from 0 to 10 g/10 min, a density of from 0.9 to 0.97 g/cm³ and a molar mass distribution M_{w}/Mₙ in the range from 3 to 50.

14. The use of a homopolymer or copolymer of ethylene as claimed in claim 12 or 13 for the production of films.

15. A film comprising a homopolymer or copolymer of ethylene as claimed in claim 12 or 13.

## Revendications

1. Procédé de préparation de catalyseurs supportés au chrome titanisé, **caractérisé en ce qu'**il comprend les étapes suivantes :
A) mise en contact d'un matériau support de type oxyde, sphérique, séché par atomisation, dans une suspension, avec un composé du titane,
B) mise en contact du matériau support ainsi traité, dans une suspension, avec une solution d'un sel de chrome, puis élimination du solvant,
C) éventuellement, calcination du précatalyseur obtenu dans l'étape B), dans une atmosphère d'un gaz inerte à des températures supérieures à 280°C, puis
D) activation du précatalyseur obtenu dans l'étape B) ou C) dans une atmosphère contenant de l'oxygène à des températures de 500 à 800°C.

2. Procédé selon la revendication 1, **caractérisé en ce qu'**on utilise en tant que matériau support de type oxyde un gel de silice.

3. Procédé selon la revendication 1 ou 2, **caractérisé en ce que** le volume des pores du matériau support est de 0,5 à 3 ml/g.

4. Procédé selon les revendications 1 à 3, **caractérisé en ce que** l'aire spécifique du matériau support est de 50 à 600 m²/g.

5. Procédé selon les revendications 1 à 4, **caractérisé en ce que** la granulométrie moyenne du matériau support est de 10 à 1000 µm.

6. Procédé selon les revendications 1 à 5, **caractérisé en ce que** le matériau support est, avant mise en contact avec le composé du titane, mis en suspension avec un acide.

7. Catalyseur supporté au chrome titanisé, pouvant être obtenu par le procédé selon les revendications 1 à 6.

8. Catalyseur supporté au chrome titanisé selon la revendication 7, ayant une teneur en chrome de 0,1 à 5 % en poids et une teneur en titane de 0,5 à 10 % en poids.

9. Procédé de préparation d'homopolymères et de copolymères de l'éthylène avec des α-oléfines par polymérisation d'éthylène ou de mélanges d'éthylène et d'α-oléfines, **caractérisé en ce qu'**on met en oeuvre le procédé en présence d'au moins un catalyseur supporté au chrome titanisé selon la revendication 7 ou 8.

10. Procédé selon la revendication 9, **caractérisé en ce qu'**on met en oeuvre le procédé en présence d'un catalyseur supporté au chrome titanisé selon la revendication 7 ou 8 et d'un catalyseur supporté au chrome non titanisé, qui peut être préparé par un procédé dans lequel on traite un matériau support sphérique et séché par atomisation selon les étapes B) et D) de la revendication 1.

11. Procédé selon la revendication 9 ou 10, **caractérisé en ce que** la polymérisation est mise en oeuvre en phase gazeuse.

12. Homopolymères et copolymères de l'éthylène avec des α-oléfines, pouvant être obtenus par un procédé selon les revendications 9 à 11.

13. Homopolymères et copolymères de l'éthylène selon la revendication 12, ayant un indice de fluidité sous charge élevée de 1 à 50 g/10 min et un indice de fluidité à 190°C sous une charge de 2,16 kg de 0 à 10 g/10 min, une masse volumique de 0,9 à 0,97 g/cm³ et une distribution des masses moléculaires Mw/Mn comprise dans la plage de 3 à 50.

14. Utilisation des homopolymères et copolymères de l'éthylène selon la revendication 12 ou 13 pour préparer des feuilles.

15. Feuilles contenant des homopolymères et copolymères de l'éthylène selon la revendication 12 ou 13.
